# EUROPÄISCHE PATENTSCHRIFT

(11) **EP 1 396 431 B1**
(45) Veröffentlichungstag und Bekanntmachung des Hinweises auf die Patenterteilung: **30.08.2006**
(21) Anmeldenummer: 03008993.2
(22) Anmeldetag: 17.04.2003
(51) Int. Cl.: B65B 43/52, B65G 17/32

(54) **Produktträger für einen länglichen Gegenstand**
product carrier for an elongated article
Support de produits pour un article oblong

(30) Priorität: 03.09.2002 DE 10241110
(43) Veröffentlichungstag der Anmeldung: 10.03.2004
(73) Patentinhaber: Lortz, Hans Joachim, 64823 Gross-Umstadt (DE)
(72) Erfinder: Lortz, Hans Joachim, 64823 Gross-Umstadt (DE)
(74) Vertreter: Kewitz, Ansgar

(56) Entgegenhaltungen:
- EP-A- 1 018 476
- WO-A-02/051728
- FR-A- 2 738 797
- US-A- 3 941 237

## Beschreibung

Die Erfindung betrifft eine Vorrichtung zum Aufschieben von Folienschlauchabschnitten über längliche Gegenstände. Insbesondere umfasst die Erfindung Komponenten für die genannte Vorrichtung, die einerseits zum Transport der länglichen Gegenstände verwendet.

Schreibmittel, wie Stifte sind häufig mit verschweißten Folienschläuchen versehen. Das Gleiche gilt für kosmetische Verpackungen, für Lippenstifte, Augenbrauenstifte, die ebenfalls mit Abdeckhüllen versehen sind. Diese so genannten Sleeves werden über den Artikel geführt und dann durch einen Wärmetunnel transportiert, in dem die Folienschläuche bzw. Sleeves einschrumpfen.

Einerseits ist es problematisch, die Gegenstände mit einem solchen Folienschlauch zu versehen. Andererseits ist es problematisch, die Gegenstände, die bereits mit einem Folienschlauch versehen sind, zu transportieren.

Aus der DE 197 37 689.4 ist ein Verfahren zum Abtrennen eines geöffneten Folienschlauchstücks und eine Vorrichtung zur Durchführung des Verfahrens bekannt. Hierbei werden die Gegenstände kontinuierlich transportiert. Die Gegenstände werden an beiden Enden klemmend gehalten. Über einen Hilfsdorn, der in der Verlängerung des Gegenstandes angeordnet ist, wird ein Schlauchfoliensegment auf den Gegenstand geschoben. Dieses Folienschlauchsegment wird vorher auf den Hilfsdorn geschoben. Hierbei läuft ein Aufnahmedorn streckenweise synchron mit dem Hilfsdorn, wobei ein Antrieb das Schlauchsegment oder den gesamten Schlauch auf den Hilfsdorn befördert. Das parallele, synchrone Laufen wurde bisher durch einen Linearmotor realisiert. Nach dem Aufschieben des Folienschlauches auf den Hilfsdorn wird der Folienschlauch vorzugsweise durch ein rotierendes Messer abgetrennt. Dies ist aus der DE 197 37 689.4 bekannt. Wie mit einer Kreissäge wird ein Segment vom Endlosschlauch abgetrennt. Aus der DE-100 38 572.9 sind weitere Abwandlungen, die in die Erfindung einfließen können, bekannt.

Ausgehend hiervon liegt der vorliegenden Erfindung die Aufgabe zugrunde, einen länglichen Gegenstand effizient zu transportieren und mit einem Folienschlauchsegment zu bestücken, das eingeschrumpft wird.

Diese Aufgabe wird durch eine Vorrichtung mit den Merkmalen der unabhängigen Ansprüche gelöst.

Im Folgenden wird die Erfindung anhand von Ausführungsbeispielen näher erläutert, die in den Figuren schematisch dargestellt sind. Gleiche Bezugsziffern in den einzelnen Figuren bezeichnen dabei gleiche Elemente. Im Einzelnen zeigt:
- Fig. 1 a-d: aus unterschiedlichen Blickwinkeln die erfindungsgemäßen Halterungen für bewegliche Gegenstände, wobei ein vollständiges Ringssegment die Aufgabe der Auflage übernimmt;
- Fig. 2: einen erfindungsgemäßen Förderer, der für die Synchronisation eines Förderbandes eingesetzt werden kann;
- Fig. 3: einen erfindungsgemäßen Schlitten, der durch eine Welle, die eine Führungsnut aufweist, parallel zu einem Förderer bewegt wird.

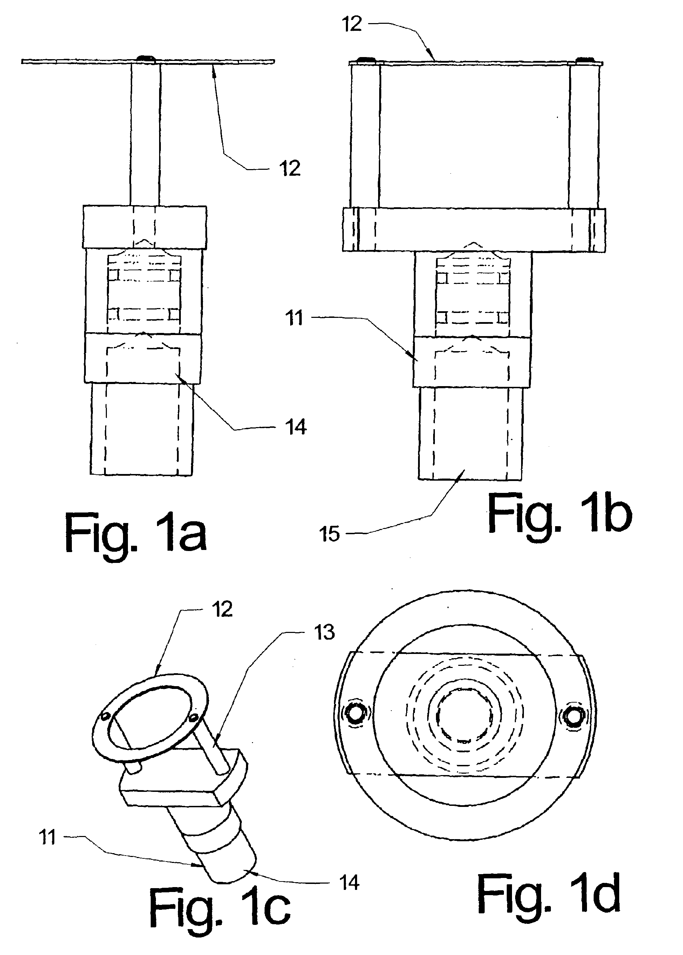

Die Figur 1 zeigt aus unterschiedlichen Blickwinkeln einen Produkttransportträger für einen länglichen Gegenstand, der den Gegenstand an mindestens einem Ende hält. Ein solcher Produkttransportträger kann am besten in Kombination mit den bereits beschriebenen Erfindungen, die in der Einleitung erwähnt wurden, eingesetzt werden. Die in diesen Erfindungen verwendeten Förderer greifen das Element an beiden Enden, indem das ringförmige Halteelement 12 über den Gegenstand geführt wird. Durch die geringe Auflagefläche des Gegenstandes ist eine Rotation möglich, wodurch eine besonders gute Wirkung in einem Wärmetunnel erreicht wird. Ein Befestigungselement 11 steht vorzugsweise in einer lösbaren Verbindung mit einem Förderer 15. Das Halteelement 12 ist ringförmig ausgebildet. Dies ermöglicht eine Rotation des Gegenstandes. Es ist jedoch auch denkbar, dass lediglich Ringsegmente oder andere vieleckige ringförmige Elemente verwendet werden. Das ringförmige Halteelement ist beabstandet vom Befestigungselement 11 durch Verwendung von Stegen bzw. Stiften 13 angeordnet.

Zur Reduzierung der Auflagefläche ist das Halteelement 12 aus einem dünnen Blech gefertigt, sodass der Gegenstand eine sehr geringe Auflagefläche besitzt.

Durch die Verwendung einer lösbaren Aufnahme 14 kann ein schneller Austausch erreicht werden. Hierdurch ist es möglich, unterschiedliche Gegenstände mit unterschiedlichen Anforderungen zu transportieren. In der bevorzugten Ausführungsform wird der Produkttransportträger in Wärmetunneln eingesetzt. Hierbei werden die Elemente kontinuierlich rotierend durch einen Wärmetunnel geführt.

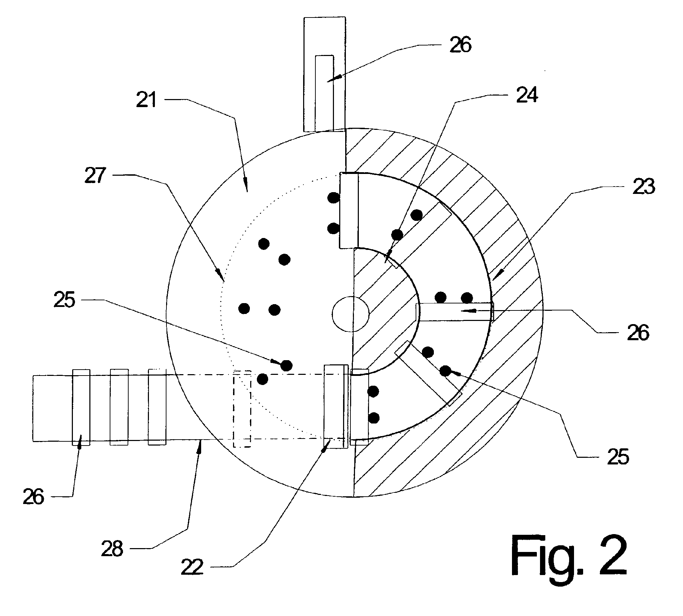

Fig. 2 zeigt ein Magazin zur Synchronisation der Zuführung von länglichen Gegenständen 26 mit einer Grundplatte 21. Solche Magazine sind immer dann notwendig, wenn Produkte von unterschiedlichen Quellen stammen oder aus unterschiedlichen Produktionsprozessen zur Maschine geleitet werden. Da sich die Taktraten unterscheiden, ist es notwendig, eine Baugruppe einzusetzen, die zu einer Synchronisation führt. Die beschriebene Grundplatte 21 weist einen Ausschnitt 22 auf, durch den die Gegenstände auf einen Förderer 28 fallen. Die Gegenstände werden vorher auf die Grundplatte geführt. Umlaufende Mitnehmer 25, die in einer Kreisbahn über die Grundplatte laufen, schieben die Gegenstände in Richtung des Ausschnittes. Entlang dieser Kreisbahn, die die Gegenstände durchlaufen, sind Bürstensegmente 23, 24 in der Innenseite und Außenseite der Kreisbahn angeordnet, zwischen denen die Elemente geführt werden. Die Bürstensegmente führen dazu, dass die Gegenstände immer mittig angeordnet sind und somit durch den Ausschnitt auf den Förderer fallen können.

In der bevorzugten Ausführungsform sind die Mitnehmer 25 an einer rotierenden Deckplatte 27 angeordnet sind.

Um eine möglichst optimale Ablage der Gegenstände auf den Förderer 28 zu erreichen, weist der Ausschnitt, durch den die Gegenstände fallen, eine abgeschrägt Kante auf.

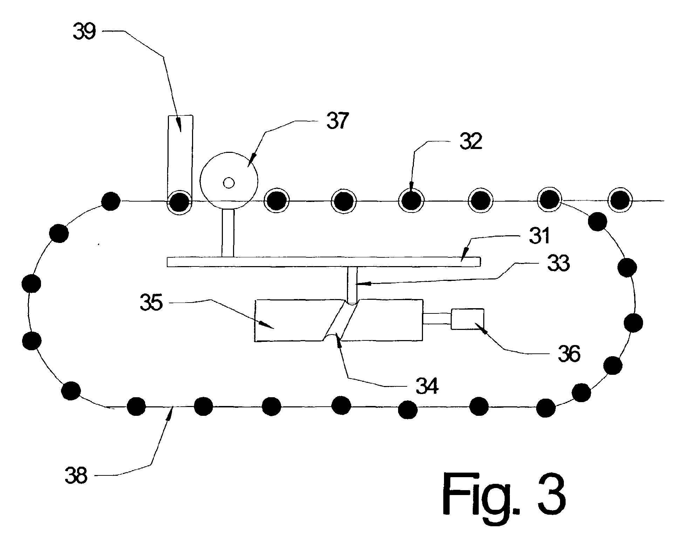

Die Figur 3 zeigt einen umlaufenden Förderer 38, der Gegenstände transportiert, auf die ein Folienschlauch aufzuschieben ist. Der Gegenstand 32 wird kontinuierlich transportiert, wobei ein Schlitten 31, der zeitweise parallel zum Gegenstand 32 geführt wird, das Aufschieben des Folienschlauchs ermöglicht. Die Steuerung der Führung des Schlittens erfolgt über eine Kurvenrolle 33, die durch eine Steuerkurve 34 geführt wir. Die Steuerkurve ist auf einer rotierenden Welle 35 ausgebildet. Die rotierende Welle wird von einem Schrittmotor 36 angetrieben.

Nachdem der Folienschlauch von einem Endlos-Folienschlauch 39 aufgeschoben wurde, schneidet ein rotierendes Schneidmesser 37, das auf dem Schlitten angeordnet ist, ein Segment vom Endlosschlauch ab. Aus den deutschen Anmeldungen 197 37 689.4 100 38 572.9 und 19908395.9 können weitere Details entnommen werden.

## Patentansprüche

1. Produkttransportträger für einen länglichen Gegenstand, der von einem Folienschlauch umhüllt ist, der den Gegenstand an einem Ende hält,
- mit einem Befestigungselement (11), zur Verbindung mit einem Förderer (15),
- mit einem ringförmigen Halteelement (12), das als Ringsegment oder vollständiger Ring ausgebildet ist, wobei das Halteelement so ausgebildet ist, dass es den Gegenstand an einem Ende mindestens teilweise umgreift, wobei das Halteelement (12) beabstandet vom Befestigungselement (11) angeordnet ist, wobei das Ringelement die Form einer dünnen Scheibe aufweist, um an den Stirnseiten, die als Auflagestelle dienen, eine geringe Auflagefläche bereitzustellen.

2. Produkttransportträger nach dem vorhergehenden Anspruch, **dadurch gekennzeichnet, dass** das Element zur Befestigung mit dem Halteelement durch Stifte (13) verbunden ist.

3. Produkttransportträger nach einem oder mehreren der vorhergehenden Ansprüche, **dadurch gekennzeichnet, dass** das Halteelement (12) aus einem dünnen Blech gefertigt ist, sodass der Gegenstand eine sehr geringe Auflagefläche besitzt.

4. Produkttransportträger nach einem oder mehreren der vorhergehenden Ansprüche, **dadurch gekennzeichnet, dass** das Befestigungselement über eine lösbare Aufnahme (14) mit dem Förderer (15) verbunden ist.

5. Produkttransportträger nach einem oder mehreren der vorhergehenden Ansprüche, **gekennzeichnet durch** eine Befestigung an einem Förderer, der die Gegenstände durch einen Wärmetunnel transportiert.

## Claims

1. Product transporting carrier for an elongate object which is enclosed by a film sleeve, said product transporting carrier holding the object at one end,
- comprising an attachment element (11) for connection to a conveyor (15),
- comprising a ring-shaped holding element (12) which is designed as a ring segment or as complete ring,
wherein the holding element is designed in such a way that it at least partially engages round the object at one end, wherein the holding element (12) is arranged at a distance from the attachment element (11), and wherein the ring element has the shape of a thin disc in order to provide a small bearing surface at the sides which serve as bearing points.

2. Product transporting carrier according to the preceding claim, **characterized in that** the element for attachment is connected to the holding element by pins (13).

3. Product transporting carrier according to one or more of the preceding claims, **characterized in that** the holding element (12) is produced from a thin metal sheet so that the object has a very small bearing surface.

4. Product transporting carrier according to one or more of the preceding claims, **characterized in that** the attachment element is connected to the conveyor (15) via a releasable holder (14).

5. Product transporting carrier according to one or more of the preceding claims, **characterized by** being attached to a conveyor which transports the objects through a heat tunnel.

## Revendications

1. Support de transport de produits pour un article oblong qui est entouré d'un tube de film qui tient l'objet à une extrémité,
- avec un élément de fixation (11) pour assurer la liaison avec un transporteur (15),
- avec un élément de support annulaire (12) qui est réalisé comme segment d'anneau ou comme anneau complet, l'élément de support étant réalisé de telle manière qu'il entoure au moins partiellement l'article à une extrémité, l'élément de support (12) étant disposé écarté de l'élément de fixation (11), l'élément annulaire ayant la forme d'une mince rondelle, afin de former une petite surface d'appui sur les faces frontales qui servent d'appuis.

2. Support de transport de produits selon la revendication précédente, **caractérisé en ce que** l'élément de fixation est relié à l'élément de support par des goujons (13).

3. Support de transport de produits selon une ou plusieurs des revendications précédentes, **caractérisé en ce que** l'élément de support (12) est fabriqué à partir d'une tôle mince, si bien que l'objet possède une très petite surface d'appui.

4. Support de transport de produits selon une ou plusieurs des revendications précédentes, **caractérisé en ce que** l'élément de fixation est relié au transporteur (15) via un logement amovible (14).

5. Support de transport de produits selon une ou plusieurs des revendications précédentes, **caractérisé par** une fixation sur un transporteur qui transporte les objets à travers un tunnel chauffant.
